# EUROPEAN PATENT APPLICATION

(11) **EP 3 944 719 A1**
(43) Date of publication of application: **26.01.2022**
(21) Application number: 19921921.3
(22) Date of filing: 26.03.2019
(51) Int. Cl.: H04W 76/28

(54) **PDCCH MONITORING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: Taor, Simon Edward William
(86) International application number: PCT/CN2019/079764
(87) International publication number: WO 2020/191638

(57) **Abstract**

Embodiments of the present application provide a PDCCH monitoring method, a terminal device, and a network device. In a sparse service scenario, PDCCH monitoring can be automatically and continuously ignored, thereby achieving energy saving of the terminal device. The PDCCH monitoring method comprises: the terminal device receives first instruction information, the first instruction information being used for instructing to ignore PDCCH monitoring within a first interval duration; in response to the first instruction information, the terminal device ignores PDCCH monitoring within the first interval duration; and the terminal device determines whether to continue ignoring PDCCH monitoring.

## Description

### BACKGROUND OF THE DISCLOSURE

### 1. Field of the Disclosure

Embodiments of the present application relate to communication technologies, and more particularly to a PDCCH monitoring method, a terminal device and a network device.

### 2. Description of the Related Art

In a New Radio (NR) system, a terminal device needs to continuously monitor Physical Downlink Control Channel (PDCCH) in a connected state based on a configuration of PDCCH monitoring window. However, there are actually only a small number of PDCCH transmission slots on which a network device schedules for the terminal device, and there is no PDCCH transmission for the terminal device for a large amount of time. This PDCCH monitoring cannot meet the power consumption requirements of the terminal device in NR. Therefore, how to optimize the PDCCH monitoring of the terminal device and reduce a waste on power in the process of receiving PDCCH by the terminal device is a problem needed to be solved.

### SUMMARY

Embodiments of the present application provide a PDCCH monitoring method, a terminal device, and a network device. In a sparse service scenario, PDCCH monitoring can be automatically and continuously skipped, thereby achieving energy saving of the terminal device.

In a first aspect, a PDCCH monitoring method is provided, and the method includes:
receiving, by a terminal device, first indication information configured to indicate skipping PDCCH monitoring within a first interval duration;
in response to the first indication information, skipping, by the terminal device, the PDCCH monitoring within the first interval duration; and
determining, by the terminal device, whether to continue skipping the PDCCH monitoring.

In a second aspect, a PDCCH monitoring method is provided, and the method includes:
sending, by a network device, first indication information configured to indicate to a counterpart device to skip PDCCH monitoring within a first interval duration; and
determining, by the network device, whether the counterpart device is expected to monitor PDCCH after the first interval duration.

In a third aspect, a terminal device is provided for executing the method according to the first aspect or each of implementations of the first aspect.

Specifically, the terminal device includes functional modules configured to execute the method in the first aspect or the method of any implementation in the first aspect.

In a fourth aspect, a network device is provided for executing the method according to the second aspect or each of implementations of the second aspect.

Specifically, the network device includes functional modules configured to execute the method in the second aspect or the method of any implementation in the second aspect.

In a fifth aspect, a terminal device is provided, which includes a processor and a memory. The memory is configured to store a computer program, and the processor is configured to call and run the computer program stored in the memory to implement the method of the first aspect or the method of any implementation of the first aspect.

In a sixth aspect, a network device is provided, which includes a processor and a memory. The memory is configured to store a computer program, and the processor is configured to call and run the computer program stored in the memory to implement the method of the second aspect or the method of any implementation of the second aspect.

In a seventh aspect, a device is provided for implementing the method of any of the first aspect to the second aspect or implementing the method of any implementation of any of the first aspect to the second aspect.

Specifically, the device includes a processor configured to call and run a computer program stored in a memory to enable an apparatus with the device installed to execute the method of any of the first aspect to the second aspect or implement the method of any implementation of any of the first aspect to the second aspect.

Optionally, the device can be a chip.

In an eighth aspect, a computer readable storage medium is provided for storing a computer program, which enables a computer to execute the method of any of the first aspect to the second aspect or execute the method of any implementation of any of the first aspect to the second aspect.

In a ninth aspect, a computer program product is provided, which includes computer program instructions enabling a computer to execute the method of any of the first aspect to the second aspect or execute the method of any implementation of any of the first aspect to the second aspect.

In a tenth aspect, a computer program is provided, when running on a computer, enabling the computer to execute the method of any of the first aspect to the second aspect or execute the method of any implementation of any of the first aspect to the second aspect.

By above technical solutions, in a sparse service scenario, PDCCH monitoring of the terminal device can be effectively reduced, thereby lowering power consumption of the terminal without increasing signaling overhead of the network device.

### BRIEF DESCRIPTION OF THE DRAWINGS

FIG. 1 is a schematic diagram illustrating a communication system framework provided in an embodiment of the present application.
FIG. 2 is a schematic diagram illustrating a DRX period provided in an embodiment of the present application.
FIG. 3 is a schematic diagram illustrating an indication of a network device for skipping PDCCH monitoring provided in the present application.
FIG. 4 is a schematic diagram illustrating another indication of a network device for skipping PDCCH monitoring provided in the present application.
FIG. 5 is a schematic diagram illustrating still another indication of a network device for skipping PDCCH monitoring provided in the present application.
FIG. 6 is a schematic diagram illustrating yet another indication of a network device for skipping PDCCH monitoring provided in the present application.
FIG. 7 is a schematic flowchart of a PDCCH monitoring method provided in an embodiment of the present application.
FIG. 8 is a schematic diagram illustrating automatic continuous skipping PDCCH monitoring provided in an embodiment of the present application.
FIG. 9 is a schematic diagram illustrating another automatic continuous skipping PDCCH monitoring provided in an embodiment of the present application.
FIG. 10 is a schematic diagram illustrating still another automatic continuous skipping PDCCH monitoring provided in an embodiment of the present application.
FIG. 11 is a schematic diagram illustrating yet another automatic continuous skipping PDCCH monitoring provided in an embodiment of the present application.
FIG. 12 is a schematic block diagram illustrating a terminal device provided in an embodiment of the present application.
FIG. 13 is a schematic block diagram illustrating a network device provided in an embodiment of the present application.
FIG. 14 is a schematic block diagram illustrating a communication device provided in an embodiment of the present application.
FIG. 15 is a schematic block diagram illustrating a device provided in an embodiment of the present application.
FIG. 16 is a schematic block diagram illustrating a communication system provided in an embodiment of the present application.

### DETAILED DESCRIPTION OF THE EMBODIMENTS

The technical solutions in the embodiments of the present application are described below with reference to appending drawings of the embodiments of the present application. Obviously, the described embodiments are a part of embodiments of the present application but are not all of the embodiments. Based on the embodiments of the present application, all the other embodiments obtained by those of ordinary skill in the art without making any inventive effort are within the scope sought to be protected in the present application.

The embodiments of the present application may be applied to various communication systems, such as, a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, and an evolution system of a NR system, an LTE-based access to unlicensed spectrum (LTE-U) system, a NR-based access to unlicensed spectrum (NR-U) system, a universal mobile telecommunications system (UMTS), Wireless Local Area Network (WLAN), Wireless Fidelity (WiFi) and a next generation communication system, or other communication systems.

In general, traditional communication systems support a limited number of connection and are easy to implement. However, with development of communication technologies, mobile communication systems will not only support traditional communication, but also support, for example, Device to Device (D2D) communication, Machine to Machine (M2M) communication, Machine Type Communication (MTC), Vehicle to Vehicle (V2V) communication, etc., and the embodiments of the present application may also be applied to these communication systems.

Optionally, the communication systems in the embodiments of the present application may be applied to a Carrier Aggregation (CA) scenario, or may be applied to a Dual Connectivity (DC) scenario, and may also be applied to a Standalone (SA) Net scenario.

There is no limit made to the applied spectrum in the embodiments of the application. For example, the embodiments of the present application may be applied to a licensed spectrum and may also be applied to an unlicensed spectrum.

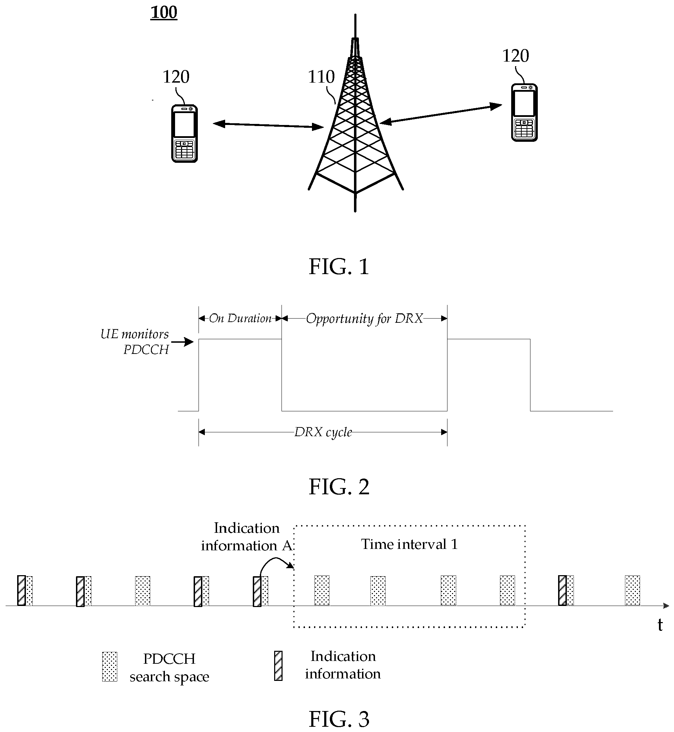

Exemplarily, a communication system 100 applied according to an embodiment of the present application is illustrated in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a terminal device under the coverage.

FIG. 1 exemplarily shows one network device and two terminal devices. Optionally, the communication system 100 may include a plurality of network devices and may include other numbers of terminal devices under the coverage of each network device. There is no limit made thereto in the embodiments of the application.

Optionally, the communication system 100 may further include other network entities such as a network controller and a mobility management entity (MME). There is no limit made thereto in the embodiments of the application.

It is to be understood that a device with a communication function in the network/system in the embodiments of the application may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There is no limit made thereto in the embodiments of the application.

It is to be understood that the terms "system" and "network" in this article may usually be exchanged in the application. In the application, the term "and/or" is only a kind of association for describing related objects and, which means that there can be three kinds of relationships, for example, A and/or B may represent three conditions, i.e., independent existence of A, existence of both A and B and independent existence of B. In addition, the character "/" in this article generally represents that previous and next associated objects form an "or" relationship.

In the embodiments of the present application, various embodiments are described in conjunction with the terminal device and network device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus or the like. The terminal device may be a station (ST) in a WLAN, a cellular phone, a cordless telephone, a session initiation protocol (SIP) telephone, a wireless local loop (WLL) station, a personal digital assistant (PDA), a handheld device having a wireless communication function, a computation device or other processing devices connected to a radio modem, a vehicle device, a wearable device, a terminal device in a next-generation communication system such as a NR network, a Public Land Mobile Network (PLMN) that will be evolved in the future, and the like.

As an example without a limitation, in the embodiments of the present application, the terminal device may also be a wearable device. The wearable device may also be referred as a wearable smart device. It is a general term of devices intelligently designed for everyday wear and developed to be wearable by using wearable technologies, and these devices are such as glasses, gloves, watches, clothing and shoes.

The wearable device is a portable device that is directly worn on the body or integrated into user's clothes or accessories. The wearable device is not only a hardware device, but also realizes powerful functions through software support, data interaction, and cloud interaction. In a broad sense, the wearable smart device includes for example a smart watch or smart glasses with full functions, a large-size, which can achieve complete or partial functions without relying on smart phones, and for example various smart bracelets and smart jewelry for physical sign monitoring that only focus on a certain type of application function, and needs to cooperate with other devices such as a smart phone.

The network device may be a device used for communicating with a mobile device. The network device may be may be an access point (AP) in WLAN, a base transceiver station (BTS) in GSM or CDMA, or a NodeB (NB) in WCDMA, or an evolutional Node B (eNB or eNodeB) in LTE, or a relay station or an access point, or a vehicle device, a wearable device, a gNB in the NR network or a network device in a PLMN that will be evolved in the future, and the like.

In the embodiments of the present application, the network device provides services for a cell, and the terminal device communicates with the network device through transmission resources (for example, frequency domain resources, or spectrum resources) used by the cell. The cell may be a cell corresponding to a network device (for example, a base station), and the cell may belong to a macro base station or a base station corresponding to a small cell. The small cell here may include a metro cell, a micro cell, a pico cell, a femto cell, and the like. These small cells have characteristics of small coverage and low transmit power, and are suitable for providing high-rate data transmission services.

It is to be understood that LTE introduces a Discontinuous Reception (DRX) transmission mechanism in consideration of power saving of terminal devices.

When there is no data transmission, the power consumption can be reduced by stopping receiving the PDCCH (at this time, PDCCH blind detection will be stopped), thereby increasing the battery life.

The basic mechanism of DRX is to configure a DRX cycle for a UE in a radio resource control (RRC) connected state (e.g., RRC_CONNECTED state). As shown in FIG. 2, the DRX cycle is composed of "On Duration" and "Opportunity for DRX". During "On Duration", the UE monitors and receives the PDCCH; during "Opportunity for DRX", the UE does not receive the PDCCH for reducing power consumption.

In addition, transmission of paging messages is also a DRX mechanism for a UE in an RRC idle state. In this case, the DRX cycle is the cycle of the transmission of paging messages.

It should be noted that for a terminal device in the RRC connected state, a large amount of power consumption is wasted. For example, the terminal device needs to continuously monitor PDCCH in the connected state based on a configuration of PDCCH monitoring window. However, there are actually only a small number of PDCCH transmission slots on which a network device schedules for the terminal device, and there is no PDCCH transmission for the terminal device for a large amount of time.

Currently, a potential method provided to reduce a waste of power consumption of the terminal device in PDCCH monitoring is that at a time interval at which the terminal device has no data transmission, the network device indicates to the terminal device a time interval (GAP) at which no scheduling is for the terminal device. The terminal device does not need to monitor PDCCH in PDCCH search spaces within the time GAP. As shown in FIG. 3, the network device sends indication information A indicating that the network device will not schedule for the terminal device within a time interval 1. The terminal device skips PDCCH monitoring within the time interval 1.

Since it does not need to perform the PDCCH monitoring within the foregoing time GAP, the power consumption of the terminal can be effectively saved as compared to continuous PDCCH monitoring in the PDCCH search spaces in the existing arts.

This mechanism is referred to as PDCCH skipping.

Using the afore-described PDCCH skipping based on network instructions can achieve power saving of the terminal device.

However, there are some problems occurred in operations of practical communication systems.

First, it is difficult for the network to determine the time GAP when the terminal does not perform the PDCCH monitoring. For example, after a current data packet is transmitted, it is difficult for the network to accurately determine when a next data packet will arrive due to randomness of arrival of terminal services. Therefore, the foregoing time GAP can only be determined based on long-term statistical results of average time interval between the arrival of two data packets. However, since data packets generally do not arrive evenly in terms of time, the foregoing time GAP determined by this approach generally cannot match actual transmission intervals of data packets of the terminal.

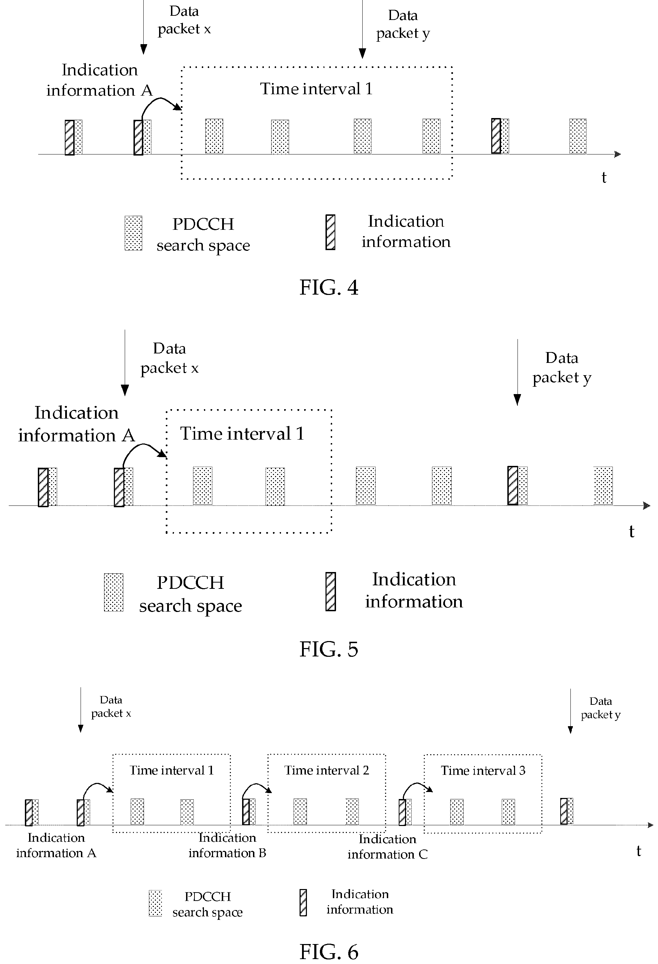

As a result, if the time GAP indicated by the network is greater than the time interval between two data packets, it may cause a delay in data transmission of the terminal. For example, as shown in FIG. 4, the terminal device receives the indication information A when receiving a data packet x, the indication information A indicates that the network device will not schedule for the terminal device within the time interval 1, and the terminal device will skip the PDCCH monitoring within the time interval 1. However, a data packet y for the terminal device has arrived in the time interval 1. Conversely, if the time GAP indicated by the network is less than the time interval between two data packets, the approach cannot fully carry out a reduction of power consumption. For example, as shown in FIG. 5, the terminal device receives the indication information A when receiving a data packet x, the indication information A indicates that the network device will not schedule for the terminal device within the time interval 1, and the terminal device will skip the PDCCH monitoring within the time interval 1. However, after the time interval 1, it takes a while for a data packet y for the terminal device to arrive.

Second, the afore-described approach may also cause additional signaling overhead. For example, as shown in FIG. 6, the network device sends the indication information A to the terminal device, and the indication information A indicates that there is no need to monitor the PDCCH within the time interval 1. But, after the time interval 1, the network device determines that the terminal still has no data transmission. Consequently, it needs to specially sends indication information B, which further indicates to the terminal device that there is no need to monitor the PDCCH within a time interval 2. after the time interval 2, if the network determines once again that the terminal still has no data transmission. Again, it needs to specially sends indication information C, which further indicates to the terminal that there is no need to monitor the PDCCH within a time interval 3, once and once again.

It can be seen that in order to make the afore-described mechanism achieve continuous energy saving for the terminal, the network may need to perform signaling the indication for multiple times when the terminal has no data scheduling for a long time. Accordingly, it causes signaling overhead.

In view of above problems, the present application proposes an enhanced solution for PDCCH skipping. In the end of a PDCCH skipping window, the terminal device may continue the PDCCH skipping based on PDCCH skipping indication if certain conditions are met.

A PDCCH skipping solution designed in the present application in view of above technical problems will be described in detail below.

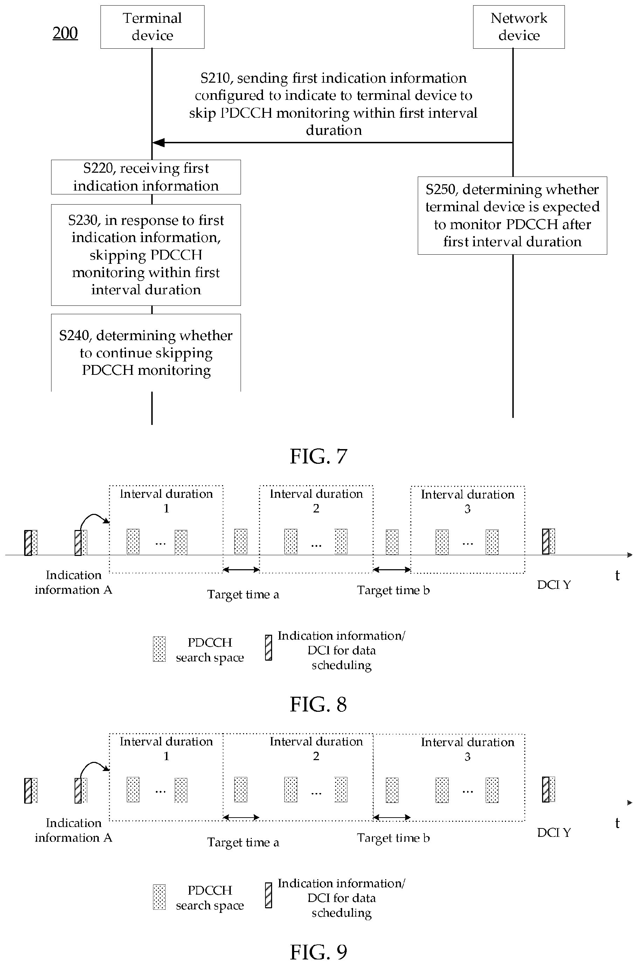

FIG. 7 is a schematic flowchart of a PDCCH monitoring method 200 according to an embodiment of the present application. As shown in FIG. 7, the method 200 may include the followings:

In S210, the network device sends first indication information to the terminal device, wherein the first indication information is configured to indicate to the terminal device to skip PDCCH monitoring within a first interval duration;

In S220, the terminal device receives the first indication information;

In S230, in response to the first indication information, the terminal device skips the PDCCH monitoring within the first interval duration;

In S240, the terminal device determines whether to continue skipping the PDCCH monitoring.

In S250, the network device determines whether the terminal device is expected to monitor PDCCH after the first interval duration.

It should be noted that the afore-described Steps S230-S240 and Step S250 are executed by the terminal device and the network device respectively, and they may not be executed in such order.

Meanwhile, in the embodiments of the present application, only Steps S220-S240 may be executed, that is, the PDCCH monitoring method 200 in the embodiments of the present application may be executed only by the terminal device; or only Steps S210 and S250 may be executed, that is, the PDCCH monitoring method 200 in the embodiments of the present application may be executed only by the network device. Of course, it is also possible that both the terminal device and the network device execute the PDCCH monitoring method 200 in the embodiments of the present application.

Optionally, the first indication information may be PDCCH skipping indication signaling.

Optionally, the first interval duration may be indicated by the first indication information, or configured through signaling (e.g., RRC signaling, broadcast, MAC CE signaling), or agreed in advance.

It should be noted that in the embodiments of the present application, the interval duration may also be referred to as an interval period.

Optionally, in the embodiments of the present application, the first indication information is carried in downlink control information dedicated to carry indication information indicating skipping the PDCCH monitoring. Alternatively, the first indication information is carried in a bit field of a DCI for data scheduling. Alternatively, the first indication information is carried in media access control control element (MAC CE) signaling.

Optionally, in foregoing S230, in response to the first indication information, it is also possible that the terminal device does not expect the network device to send PDCCH within the first time interval.

It should be noted that the terminal device monitors the PDCCH only in PDCCH search spaces within a time interval. That is, the terminal device monitors the PDCCH only at specific time points (i.e., the time points where the PDCCH search spaces are located) within a time interval, and the terminal device will not monitor the PDCCH at other points.

If the terminal device skips the PDCCH monitoring within a time interval, it can be understood that the terminal device skips the PDCCH monitoring in the PDCCH search spaces within this time interval. In addition, the PDCCH search spaces may be configured by the network device, that is, the PDCCH search spaces in each time interval are configured by the network device.

Optionally, in the embodiments of the present application, foregoing Step S240 may be that the terminal device determines whether to continue skipping the PDCCH monitoring at first target time.

Further, foregoing Step S240 may also be that the terminal device determines, at the first target time, whether to continue skipping the PDCCH monitoring after the first interval duration. Further, foregoing Step S240 may also be that the terminal device determines, at the first target time, whether to continue skipping the PDCCH monitoring within a second interval duration after the first interval duration.

Optionally, in the embodiments of the present application, foregoing Step S240 may be that the terminal device determines whether to continue skipping the PDCCH monitoring within a second interval duration after the first interval duration. Further, foregoing Step S240 may also be that the terminal device determines, at the first target time, whether to continue skipping the PDCCH monitoring within the second interval duration.

Optionally, in the embodiment of the present application, foregoing Step S240 may specifically be that:
if the terminal device does not receive a DCI for data scheduling, and/or does not receive indication information indicating skipping the PDCCH monitoring, and/or does not receive wake-up indication information for waking up the terminal device to monitor the PDCCH, the terminal device determines to continue skipping the PDCCH monitoring.

Further, specifically, foregoing Step S240 may also be that:
if at the first target time the terminal device does not receive a DCI for data scheduling, and/or does not receive indication information indicating skipping the PDCCH monitoring, and/or does not receive wake-up indication information for waking up the terminal device to monitor the PDCCH, the terminal device determines to continue skipping the PDCCH monitoring.

Further, specifically, foregoing Step S240 may also be that:
if at the first target time the terminal device does not receive a DCI for data scheduling, and/or does not receive indication information indicating skipping the PDCCH monitoring, and/or does not receive wake-up indication information for waking up the terminal device to monitor the PDCCH, the terminal device determines to continue skipping the PDCCH monitoring within the second interval duration.

That is, when certain conditions are met, the terminal device can automatically continue skipping the PDCCH monitoring without a need of indication signaling by the network device. In such a way, signaling overhead of the network device can be reduced, and energy saving of the terminal device is also achieved.

It should be noted that there are also some other conditions, and if the terminal device determines that these conditions are met, the terminal device continues skipping the PDCCH monitoring.

Optionally, foregoing Step S250 may also be that the network device determines at first target time whether the terminal device is expected to monitor the PDCCH after the first interval duration.

Further, foregoing Step S250 may also be that the network device determines at the first target time whether the terminal device is expected to monitor the PDCCH within a second interval duration after the first interval duration.

Optionally, foregoing Step S250 may also be that the network device determines whether the terminal device is expected to monitor the PDCCH within a second interval duration after the first interval duration.

Further, foregoing Step S250 may also be that the network device determines at first target time whether the terminal device is expected to monitor the PDCCH within the second interval duration.

Optionally, foregoing Step S250 may specifically be that:
after sending the first indication information, if the network device does not send downlink control information (DCI) for data scheduling, and/or does not send indication information indicating skipping the PDCCH monitoring, and/or does not send wake-up indication information for waking up the terminal device to monitor the PDCCH, the network device determines that the terminal device is not expected to monitor the PDCCH.

Further, specifically, foregoing Step S250 may also be that:
after sending the first indication information, if at the first target time the network device does not send a DCI for data scheduling, and/or does not send indication information indicating skipping the PDCCH monitoring, and/or does not send wake-up indication information for waking up the terminal device to monitor the PDCCH, the network device determines that the terminal device is not expected to monitor the PDCCH.

Further, specifically, foregoing Step S250 may also be that:
after sending the first indication information, if at the first target time the network device does not send a DCI for data scheduling, and/or does not send indication information indicating skipping the PDCCH monitoring, and/or does not send wake-up indication information for waking up the terminal device to monitor the PDCCH, the network device determines that the terminal device is not expected to monitor the PDCCH within a second interval duration.

It should be noted that by determining whether data to be sent to the terminal device exist, the network device can determine whether to send the DCI for data scheduling and/or the wake-up indication information for waking up the terminal device to monitor the PDCCH.

For example, if there are data needed to be sent to the terminal device, the network device sends to the terminal device the DCI for data scheduling and/or the wake-up indication information for waking up the terminal device to monitor the PDCCH.

It should also be noted that in a case that the interval duration needs to be re-determined, the network device resends the indication information indicating skipping the PDCCH monitoring. For example, the network device sends indication information A configured to indicate to the terminal device to skip the PDCCH monitoring within an interval duration 1. If the network device considers that the interval duration 1 cannot meet current service requirements, the network device sends indication information B, and the indication information B indicates that the terminal device skips the PDCCH monitoring within an interval duration 2. Then, based on the indication information B, the terminal device skips the PDCCH monitoring within the interval duration 2.

Optionally, in the embodiments of the present application, the first target time is within the first interval duration, or the first target time is after the first interval duration.

Optionally, in the embodiments of the present application, the first target time is the first available PDCCH monitoring position after the first interval duration, or the first target time is a PDCCH monitoring position within a T time period after the first interval duration.

Optionally, the T time period is configured by the network device. At least one PDCCH monitoring position exists in the T time period.

It should be noted that in the embodiments of the present application, the target time may also be referred to as a target time point. For example, the first available PDCCH monitoring position after the first interval duration is one target time point. For another example, each of at least one PDCCH monitoring position within the T time period after the first interval duration is one target time point.

Optionally, in the embodiments of the present application, in the case that the first target time is after the first interval duration:
a start time point of the second interval duration is after the first interval duration and the second interval duration does not include the first target time, or the start time point of the second interval duration is as the same as an end time point of the first interval duration and the second interval duration includes the first target time.

Optionally, in the embodiments of the present application, the second interval duration is equal to the first interval duration, or the second interval duration is configured by the network device or pre-configured.

Optionally, when the terminal device receives the DCI for data scheduling at target time after the first interval duration, the terminal device receives or transmits data based on the DCI for data scheduling.

That is to say, the terminal device stops the PDCCH skipping based on the received DCI for data scheduling.

Optionally, as exemplary example 1, the terminal device executes the afore-described method 200, and if a first DCI for data scheduling is received at target time L, the terminal device continues to monitor the PDCCH after receiving the first DCI until new indication information indicating skipping the PDCCH monitoring is received, and the afore-described method 200 is executed based on the new indication information indicating skipping the PDCCH monitoring.

Optionally, as exemplary example 2, the terminal device executes the afore-described method 200, and if a first DCI for data scheduling is received at target time L, the terminal device starts a first timer upon receiving the first DCI and monitors the PDCCH during the first timer is activated. Every when a new DCI is received, the first timer is set to zero (also called reset or returned to zero). Whether to skip the PDCCH monitoring is determined at first i-th target time after the first timer expires, where i is a positive integer.

Optionally, as exemplary example 3, the terminal device executes the afore-described method 200, and if a first DCI for data scheduling is received at target time L, the terminal device monitors the PDCCH within the first GAP that starts from the received first DCI. Whether to skip the PDCCH monitoring is determined at first i-th target time after the first GAP, where i is a positive integer.

It should be noted that determining whether to skip the PDCCH monitoring in foregoing exemplary examples 2 and 3 may refer to the determining whether to skip the PDCCH monitoring in the embodiments of the present application, and is not described herein again. The afore-described DCI for data scheduling may be used to schedule uplink data or may be used to schedule downlink data.

Optionally, in the case that the terminal device receives new indication information at target time after the first interval duration and the new indication information is used to indicate skipping the PDCCH monitoring, the terminal device performs PDCCH skipping based on the new indication information.

Optionally, as exemplary example 4, the terminal device receives indication information A configured to indicate to the terminal device to skip the PDCCH monitoring within an interval duration 1, and the terminal device skips the PDCCH monitoring within the interval duration 1. If at target time after the interval duration 1, the terminal device receives indication information B indicating skipping the PDCCH monitoring and the indication information B indicates to the terminal device to skip the PDCCH monitoring within an interval duration 2, then the terminal device skips the PDCCH monitoring within the time interval 2 based on the Indication information B.

It should be noted that in the exemplary example 4, the interval duration 2 is an interval duration re-configurated by the network device, that is, the network device considers that the interval duration 1 cannot meet current service requirements of the terminal device, and thus reconfigures with the interval duration 2.

Optionally, in the embodiments of the present application, in the case that the terminal device determines to continue skipping the PDCCH monitoring, the terminal device continues skipping the PDCCH monitoring within a second interval duration after the first interval duration.

Optionally, in the embodiments of the present application, after the terminal device continues skipping the PDCCH monitoring within the second interval duration after the first interval duration, the terminal device may determine whether to continue skipping the PDCCH monitoring after the second interval duration. Further, the terminal device determines at second target time whether to continue skipping the PDCCH monitoring after the second interval duration. Further, the terminal device determines at the second target time whether to continue skipping the PDCCH monitoring within a third interval duration after the second interval duration.

Optionally, in the embodiments of the present application, after the terminal device continues skipping the PDCCH monitoring within the second interval duration after the first interval duration, the terminal device may determine whether to continue skipping the PDCCH monitoring after the second interval duration. Further, the terminal device determines whether to continue skipping the PDCCH monitoring within a third interval duration after the second interval duration. Further, the terminal device determines at second target time whether to continue skipping the PDCCH monitoring within the third interval duration.

That is to say, after the terminal device skips the PDCCH monitoring within the first interval duration based on the first indication information, the terminal device continues skipping the PDCCH monitoring within the second interval duration.

Specifically, after the terminal device continues skipping the PDCCH monitoring within the second interval duration after the first interval duration, if the terminal device still does not receive a DCI for data scheduling, and/or still does not receive indication information indicating skipping the PDCCH monitoring, and/or still does not receive wake-up indication information for waking up the terminal device to monitor the PDCCH, the terminal device determines to continue skipping the PDCCH monitoring after the second interval duration.

Further, if at the second target time the terminal device still does not receive a DCI for data scheduling, and/or still does not receive indication information indicating skipping the PDCCH monitoring, and/or still does not receive wake-up indication information for waking up the terminal device to monitor the PDCCH, the terminal device determines to continue skipping the PDCCH monitoring after the second interval duration.

Further, if at the second target time the terminal device still does not receive a DCI for data scheduling, and/or still does not receive indication information indicating skipping the PDCCH monitoring, and/or still does not receive wake-up indication information for waking up the terminal device to monitor the PDCCH, the terminal device determines to continue skipping the PDCCH monitoring within a third interval duration after the second interval duration.

Optionally, in the embodiments of the present application, in the case that the network device determines that the terminal device is not expected to monitor the PDCCH after the first interval duration, the network device does not expect the terminal device to monitor the PDCCH within a second interval duration after the first interval duration.

In the case that the network device does not expect the terminal device to monitor the PDCCH within the second interval duration after the first interval duration, the network device determines whether the terminal device is expected to monitor the PDCCH after the second interval duration.

Optionally, the network device determines at second target time whether the terminal device is expected to monitor the PDCCH after the second interval duration.

Further, the network device determines at the second target time whether the terminal device is expected to monitor the PDCCH within a third interval duration after the second interval duration.

Optionally, the network device determines whether the terminal device is expected to monitor the PDCCH within a third interval duration after the second interval duration.

Further, the network device determines at the second target time whether the terminal device is expected to monitor the PDCCH within the third interval duration.

Specifically, after the second indication information, if the network device still does not send a DCI for data scheduling, and/or still does not send indication information indicating skipping the PDCCH monitoring, and/or still does not send wake-up indication information for waking up the terminal device to monitor the PDCCH, the network device does not expect the terminal device to monitor the PDCCH after the second interval duration.

Further, if at the second target time the network device still does not send a DCI for data scheduling, and/or still does not send indication information indicating skipping the PDCCH monitoring, and/or still does not send wake-up indication information for waking up the terminal device to monitor the PDCCH, the network device does not expect the terminal device to monitor the PDCCH after the second interval duration.

Further, if at the second target time the network device still does not send a DCI for data scheduling, and/or still does not send indication information indicating skipping the PDCCH monitoring, and/or still does not send wake-up indication information for waking up the terminal device to monitor the PDCCH, the network device does not expect the terminal device to monitor the PDCCH within a third interval duration after the second interval duration.

Optionally, the second target time is within the second interval duration, or the second target time is after the second interval duration.

Optionally, the second target time is the first available PDCCH monitoring position after the second interval duration, or the second target time is a PDCCH monitoring position within a T time period after the second interval duration.

Optionally, the T time period is configured by the network device.

Optionally, the second target time is after the second interval duration, and
a start time point of the third interval duration is after the second interval duration and the third interval duration does not include the second target time, or the start time point of the third interval duration is as the same as an end time point of the second interval duration and the third interval duration includes the second target time.

Optionally, the third interval duration is equal to the first interval duration and/or the second interval duration.

Optionally, as Embodiment 1, as shown in FIGs. 8 and 9, the terminal device can automatically continue implementing PDCCH skipping. Specifically, the terminal device receives indication information A, which indicates to the terminal device to skip the PDCCH monitoring within a time interval 1. At target time a after the interval duration 1, the terminal device determines to continue skipping the PDCCH monitoring within an interval duration 2. Next, at target time b after the interval duration 2, the terminal device determines to continue skipping the PDCCH monitoring within an interval duration 3. After receiving a DCI Y for scheduling data packet transmission after the interval duration 3, the terminal device receives or transmits the data packet based on the DCI Y. As shown in FIG. 8, the target time a is not included in the interval duration 2, and the target time b is not included in the interval duration 3. As shown in FIG. 9, the target time a is included in the interval duration 2, and the target time b is included in the interval duration 3.

In Embodiment 1, even if the network device does not perform data scheduling for the terminal device for a long time, the terminal can automatically continue implementing the PDCCH skipping so as to achieve energy saving of the terminal without additional overhead of the network. On the other hand, the automatic continuous PDCCH skipping is also beneficial for the network to configure a relatively small PDCCH skipping interval duration (GAP). Once data arrives, scheduling for the data of the terminal device can be made in time at the end of the PDCCH skipping GAP. Meanwhile, the automatic continuous PDCCH skipping ensures that the terminal device can effectively implement the PDCCH skipping when no service arrives, and the shorter PDCCH skipping GAP basically has no impact on energy saving of the terminal device.

Optionally, in the embodiments of the present application, if within N interval durations after the first interval duration, the terminal device does not receive a DCI for data scheduling and/or, does not receive indication information indicating skipping the PDCCH monitoring, and/or does not receive wake-up indication information for waking up the terminal device to monitor the PDCCH, where N is a positive integer; and
if at target time after a N-th interval duration after the first interval duration, the terminal device does not receive a DCI for data scheduling and/or, does not receive indication information indicating skipping the PDCCH monitoring, and/or does not receive wake-up indication information for waking up the terminal device to monitor the PDCCH, the terminal device continues skipping the PDCCH monitoring within a fourth interval duration.

Correspondingly, if within N interval durations after the first interval duration, the network device does not send a DCI for data scheduling and/or, does not send indication information indicating skipping the PDCCH monitoring, and/or does not send wake-up indication information for waking up the terminal device to monitor the PDCCH, where N is a positive integer; and
if at target time after a N-th interval duration after the first interval duration, the network device does not send a DCI for data scheduling and/or, does not send indication information indicating skipping the PDCCH monitoring, and/or does not send wake-up indication information for waking up the terminal device to monitor the PDCCH, the network device does not expect the terminal device to monitor the PDCCH within a fourth interval duration after the N-th interval durations.

Optionally, the fourth interval duration is M times the first interval duration or M times the second interval duration, or the fourth interval duration is configured by the network device or is pre-configured, where M is a positive integer.

Optionally, M is configured by the network device or pre-configured.

It should be noted that the fourth interval duration is configured by the network device or is pre-configured, and the fourth interval duration is greater than the first interval duration and/or the second interval duration.

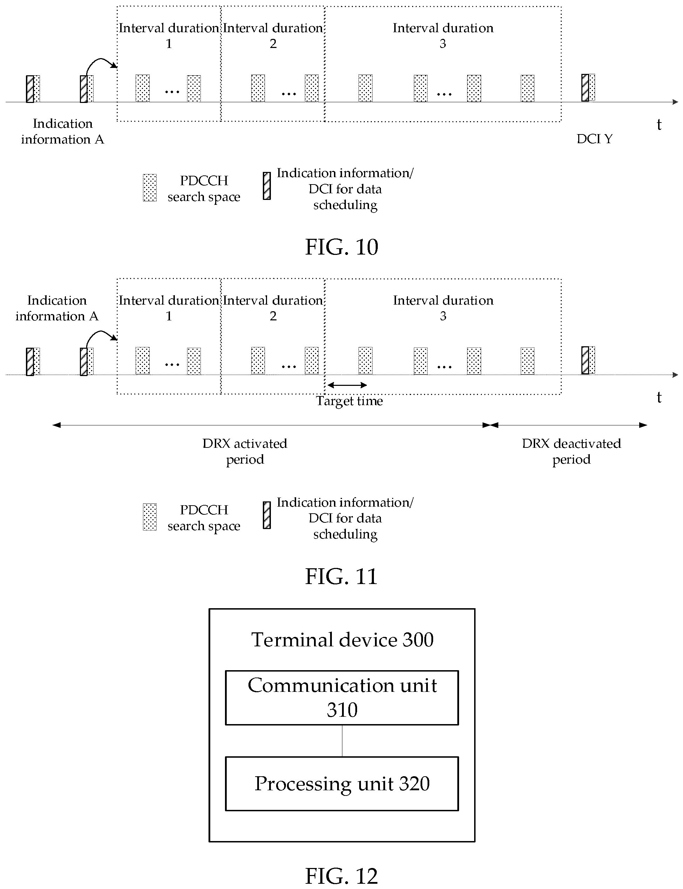

Optionally, as Embodiment 2, as shown in FIG. 10, the terminal device can automatically continue implementing PDCCH skipping with adjustable interval duration. Specifically, the terminal device receives indication information A, which indicates to the terminal device to skip the PDCCH monitoring within a time interval 1. After the interval duration 1, the terminal device continues skipping the PDCCH monitoring within an interval duration 2. Next, after the interval duration 2, the terminal device continues skipping the PDCCH monitoring within an interval duration 3. After receiving a DCI Y for scheduling data packet transmission after the interval duration 3, the terminal device receives or transmits the data packet based on the DCI Y.

As shown in FIG. 10, the interval duration 1 is equal to the interval duration 2, and the interval duration 3 is greater than the interval duration 1.

In Embodiment 2, based on the automatic continuous PDCCH skipping, the scheme of automatic continuous PDCCH skipping with adjustable interval duration can meet the service requirements of the terminal in a more efficient way by adaptively adjusting the PDCCH skipping interval duration. When scheduling is not made for the terminal for a long time, a longer interval duration can be adopted, thereby further reducing PDCCH detection of the terminal.

Optionally, in the embodiments of the present application, the method 200 is applicable to Discontinuous Reception (DRX).

Specifically, if at k-th target time the terminal device does not receive a DCI for data scheduling, and/or does not receive indication information indicating skipping the PDCCH monitoring, and/or does not receive wake-up indication information for waking up the terminal device to monitor the PDCCH, and determines at the k-th target time that the end of a next interval duration is during a DRX period, where k is an integer greater than or equal to 1,
then the terminal device performs one of the following operations:
entering DRX directly after the target time;
performing normal PDCCH monitoring after the target time until entering the DRX;
performing normal PDCCH monitoring after the target time, and if receiving a DCI for data scheduling before entering the DRX, receiving or transmitting data based on the DCI.

Correspondingly, if at k-th target time the network device does not send a DCI for data scheduling, and/or does not send indication information indicating skipping the PDCCH monitoring, and/or does not send wake-up indication information for waking up the terminal device to monitor the PDCCH, and determines at the k-th target time that at the end of a next interval duration the terminal device is during a DRX period, where k is an integer greater than or equal to 1,
then the network device performs one of the following operations:
expecting the terminal device to enter DRX directly after the target time;
expecting the terminal device to perform normal PDCCH monitoring after the target time until entering the DRX;
expecting the terminal device to perform normal PDCCH monitoring after the target time, and if sending a DCI for data scheduling before entering the DRX, expecting the terminal device to receive or transmit data based on the DCI.

Optionally, as Embodiment 3, as shown in FIG. 11, the terminal device can automatically continue implementing PDCCH skipping in combination with DRX. Specifically, the terminal device receives indication information A, which indicates to the terminal device to skip the PDCCH monitoring within a time interval 1. After the interval duration 1, the terminal device continues skipping the PDCCH monitoring within an interval duration 2. After target time after the interval duration 2, if the terminal device does not receive a DCI for data scheduling and/or does not receive indication information indicating skipping the PDCCH monitoring, and the end of an interval duration 3 is during a DRX period,
then the terminal device performs one of the following operations:
entering DRX directly after the target time;
performing normal PDCCH monitoring after the target time until entering the DRX;
performing normal PDCCH monitoring after the target time, and if receiving a DCI for data scheduling before entering the DRX, receiving or transmitting data based on the DCI.

It should be noted that Embodiment 3 can be combined with Embodiment 2 and/or Embodiment 1.

Therefore, in the embodiments of the present application, in a sparse service scenario, PDCCH monitoring of the terminal device can be effectively reduced, thereby lowering power consumption of the terminal without increasing signaling overhead of the network device.

FIG. 12 is a schematic block diagram illustrating a terminal device 300 according to an embodiment of the present application. As shown in FIG. 12, the terminal device 300 includes:
a communication unit 310, configured for receiving first indication information configured to indicate skipping PDCCH monitoring within a first interval duration;
a processing unit 320, configured for controlling, in response to the first indication information, the communication unit 310 to skip the PDCCH monitoring within the first interval duration; and
the processing unit 320, further configured for determining whether to continue skipping the PDCCH monitoring.

Optionally, the processing unit 320 is configured for:
determining at first target time whether to continue skipping the PDCCH monitoring.

Optionally, the processing unit 320 is configured for:
determining at the first target time whether to continue skipping the PDCCH monitoring after the first interval duration.

Optionally, the processing unit 320 is configured for:
determining at the first target time whether to continue skipping the PDCCH monitoring within a second interval duration after the first interval duration.

Optionally, the processing unit 320 is configured for:
determining whether to continue skipping the PDCCH monitoring within a second interval duration after the first interval duration.

Optionally, the processing unit 320 is configured for:
determining at first target time whether to continue skipping the PDCCH monitoring within the second interval duration.

Optionally, the first target time is within the first interval duration, or the first target time is after the first interval duration.

Optionally, the first target time is the first available PDCCH monitoring position after the first interval duration, or the first target time is a PDCCH monitoring position within a T time period after the first interval duration.

Optionally, the first target time is after the first interval duration, and
a start time point of the second interval duration is after the first interval duration and the second interval duration does not include the first target time, or the start time point of the second interval duration is as the same as an end time point of the first interval duration and the second interval duration includes the first target time.

Optionally, the second interval duration is equal to the first interval duration, or the second interval duration is configured by a network device or pre-configured.

Optionally, the processing unit 320 is configured for:
if the terminal device 300 does not receive downlink control indication information (DCI) for data scheduling, and/or does not receive indication information indicating skipping the PDCCH monitoring, and/or does not receive wake-up indication information for waking up the terminal device to monitor the PDCCH, determining to continue skipping the PDCCH monitoring.

Optionally, the processing unit 320 is configured for:
if at the first target time the terminal device does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring.

Optionally, in a case that the processing unit 320 determines to continue skipping the PDCCH monitoring, the processing unit 320 is further configured for:
controlling the communication unit 310 to continue skipping the PDCCH monitoring within a second interval duration after the first interval duration.

Optionally, the processing unit 320 is configured for:
determining whether to continue skipping the PDCCH monitoring after the second interval duration.

Optionally, the processing unit 320 is configured for:
determining at second target time whether to continue skipping the PDCCH monitoring within the second interval duration.

Optionally, the processing unit 320 is configured for:
determining at the second target time whether to continue skipping the PDCCH monitoring within a third interval duration after the second interval duration.

Optionally, the processing unit 320 is configured for:
determining whether to continue skipping the PDCCH monitoring within a third interval duration after the second interval duration.

Optionally, the processing unit 320 is configured for:
determining at second target time whether to continue skipping the PDCCH monitoring within the third interval duration.

Optionally, the second target time is within the second interval duration, or the second target time is after the second interval duration.

Optionally, the second target time is the first available PDCCH monitoring position after the second interval duration, or the second target time is a PDCCH monitoring position within a T time period after the second interval duration.

Optionally, the second target time is after the second interval duration, and
a start time point of the third interval duration is after the second interval duration and the third interval duration does not include the second target time, or the start time point of the third interval duration is as the same as an end time point of the second interval duration and the third interval duration includes the second target time.

Optionally, the third interval duration is equal to the first interval duration and/or the second interval duration.

Optionally, the processing unit 320 is configured for:
if the terminal device 300 still does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring after the second interval duration.

Optionally, the processing unit 320 is configured for:
if at the second target time the terminal device 300 still does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring after the second interval duration.

Optionally, within N interval durations after the first interval duration, the terminal device 300 does not receive a DCI for data scheduling, and/or does not receive indication information indicating skipping the PDCCH monitoring, and/or does not receive wake-up indication information for waking up the terminal device to monitor the PDCCH, where N is a positive integer, the processing unit 320 is further configured for:
if at target time after a N-th interval duration after the first interval duration, the terminal device 300 does not receive a DCI for data scheduling, and/or does not receive indication information indicating skipping the PDCCH monitoring, and/or does not receive wake-up indication information for waking up the terminal device to monitor the PDCCH, continuing controlling the communication unit 310 to skip the PDCCH monitoring within a fourth interval duration after the N-th interval duration.

Optionally, the fourth interval duration is M times the first interval duration, or the fourth interval duration is configured by a network device or is pre-configured, where M is a positive integer.

Optionally, M is configured by the network device or pre-configured.

Optionally, the T time period is configured by a network device or pre-configured.

Optionally, the terminal device 300 is applied to DRX.

Optionally, if at k-th target time the terminal device 300 does not receive a DCI for data scheduling, and/or does not receive indication information indicating skipping the PDCCH monitoring, and/or does not receive wake-up indication information for waking up the terminal device to monitor the PDCCH, and determines at the k-th target time that the end of a next interval duration is during a DRX period, where k is an integer greater than or equal to 1,
then the processing unit 320 performs one of the following operations:
entering DRX directly after the target time;
controlling the communication unit 310 to perform normal PDCCH monitoring after the target time until entering the DRX; and
controlling the communication unit 310 to perform normal PDCCH monitoring after the target time, and if the communication unit receives a DCI for data scheduling before entering the DRX, controlling the communication unit 310 to receive or transmit data based on the DCI.

Optionally, the first indication information is carried in DCI carrying indication information dedicated to indicating skipping the PDCCH monitoring, or the first indication information is carried in a bit field of a DCI for data scheduling, or the first indication information is carried in MAC CE signaling.

It is to be understood that the terminal device 300 according to the embodiment of the application may correspond to the terminal device in the method embodiment of the application and the above-mentioned and other operations and/or functions of each unit in the terminal device 300 are adopted to implement the corresponding flows executed by the terminal device in the method 200 shown in FIG. 7 respectively and will not be elaborated herein for simplicity.

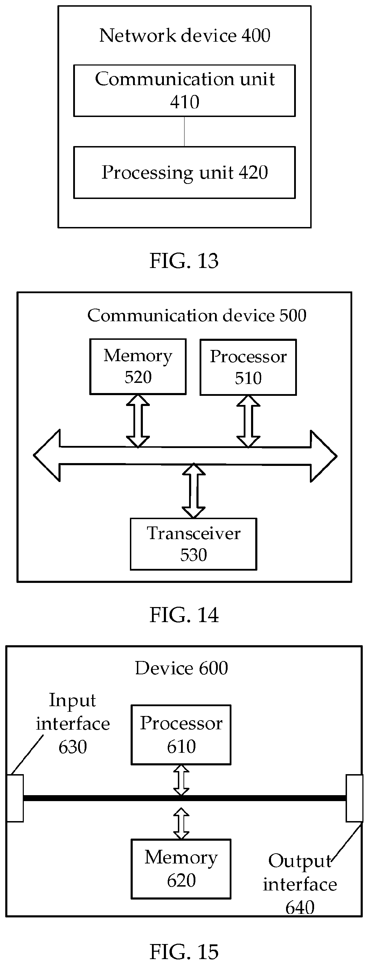

FIG. 13 is a schematic block diagram illustrating a network device 400 according to an embodiment of the present application. As shown in FIG. 13, the network device 400 includes:
a communication unit 410, configured for sending first indication information configured to indicate to a counterpart device to skip PDCCH monitoring within a first interval duration; and
a processing unit 420, configured for determining whether the counterpart device is expected to monitor PDCCH after the first interval duration.

Optionally, the processing unit 420 is configured for:
determining at first target time whether the counterpart device is expected to monitor the PDCCH after the first interval duration.

Optionally, the processing unit 420 is configured for:
determining at the first target time, whether the counterpart device is expected to monitor the PDCCH within a second interval duration after the first interval duration.

Optionally, the processing unit 420 is configured for:
determining whether the counterpart device is expected to monitor the PDCCH within a second interval duration after the first interval duration.

Optionally, the processing unit 420 is configured for:
determining at first target time whether the counterpart device is expected to monitor the PDCCH within the second interval duration.

Optionally, the first target time is within the first interval duration, or the first target time is after the first interval duration.

Optionally, the first target time is the first available PDCCH monitoring position after the first interval duration, or the first target time is a PDCCH monitoring position within a T time period after the first interval duration.

Optionally, the first target time is after the first interval duration, and
a start time point of the second interval duration is after the first interval duration and the second interval duration does not include the first target time, or the start time point of the second interval duration is as the same as an end time point of the first interval duration and the second interval duration includes the first target time.

Optionally, the second interval duration is equal to the first interval duration, or the second interval duration is configured by the network device.

Optionally, the processing unit 420 is configured for:
after sending the first indication information, if the communication unit does not send downlink control information (DCI) for data scheduling, and/or does not send indication information indicating skipping the PDCCH monitoring, and/or does not send wake-up indication information for waking up the terminal device to monitor the PDCCH, determining that the counterpart device is not expected to monitor the PDCCH.

Optionally, the processing unit 420 is configured for:
after sending the first indication information, if at the first target time the communication unit does not send a DCI for data scheduling, and/or does not send indication information indicating skipping the PDCCH monitoring, and/or does not send wake-up indication information for waking up the terminal device to monitor the PDCCH, determining that the counterpart device is not expected to monitor the PDCCH.

Optionally, in a case that the processing unit 420 determines not to expect the counterpart device to monitor the PDCCH after the first interval duration, the processing unit 420 is further configured for:
not expecting the counterpart device to monitor the PDCCH within a second interval duration after the first interval duration.

Optionally, the processing unit 320 is further configured for:
determining whether to expect the counterpart device to monitor the PDCCH after the second interval duration.

Optionally, the processing unit 420 is configured for:
determining at second target time whether to expect the counterpart device to monitor the PDCCH after the second interval duration.

Optionally, the processing unit 420 is configured for:
determining at the second target time whether to expect the counterpart device to monitor the PDCCH within a third interval duration after the second interval duration.

Optionally, the processing unit 420 is configured for:
determining whether to expect the counterpart device to monitor the PDCCH within a third interval duration after the second interval duration.

Optionally, the processing unit 420 is configured for:
determining at second target time whether to expect the counterpart device to monitor the PDCCH within the third interval duration.

Optionally, the second target time is within the second interval duration, or the second target time is after the second interval duration.

Optionally, the second target time is the first available PDCCH monitoring position after the second interval duration, or the second target time is a PDCCH monitoring position within a T time period after the second interval duration.

Optionally, the second target time is after the second interval duration, and
a start time point of the third interval duration is after the second interval duration and the third interval duration does not include the second target time, or the start time point of the third interval duration is as the same as an end time point of the second interval duration and the third interval duration includes the second target time.

Optionally, the third interval duration is equal to the first interval duration and/or the second interval duration.

Optionally, the processing unit 420 is configured for:
if the communication unit 410 still does not send a DCI for data scheduling, and/or still does not send indication information indicating skipping the PDCCH monitoring, and/or still does not send wake-up indication information for waking up the terminal device to monitor the PDCCH, not expecting the counterpart device to monitor the PDCCH after the second interval duration.

Optionally, the processing unit 420 is configured for:
if at the second target time the communication unit 410 still does not send a DCI for data scheduling, and/or still does not send indication information indicating skipping the PDCCH monitoring, and/or still does not send wake-up indication information for waking up the terminal device to monitor the PDCCH, not expecting the counterpart device to monitor the PDCCH after the second interval duration.

Optionally, within N interval durations after the first interval duration, the communication unit 410 does not send a DCI for data scheduling, and/or does not send indication information indicating skipping the PDCCH monitoring, and/or does not send wake-up indication information for waking up the terminal device to monitor the PDCCH, where N is a positive integer, the processing unit 420 is further configured for:
if at target time after a N-th interval duration after the first interval duration, the communication unit 410 does not send a DCI for data scheduling, and/or does not send indication information indicating skipping the PDCCH monitoring, and/or does not send wake-up indication information for waking up the terminal device to monitor the PDCCH, not expecting the counterpart device to monitor the PDCCH within a fourth interval duration after the N-th interval durations.

Optionally, the fourth interval duration is M times the first interval duration or M times the second interval duration, or the fourth interval duration is configured by the network device, where M is a positive integer.

Optionally, M is configured by the network device 400.

Optionally, the T time period is configured by the network device 400.

Optionally, the network device 400 is applied to DRX.

Optionally, if at k-th target time the communication unit 410 does not send a DCI for data scheduling, and/or does not send indication information indicating skipping the PDCCH monitoring, and/or does not send wake-up indication information for waking up the terminal device to monitor the PDCCH, and determines at the k-th target time that at the end of a next interval duration the counterpart device is during a DRX period, where k is an integer greater than or equal to 1,
then the processing unit 420 performs one of the following operations:
expecting the counterpart device to enter DRX directly after the target time;
expecting the counterpart device to perform normal PDCCH monitoring after the target time until entering the DRX; and
expecting the counterpart device to perform normal PDCCH monitoring after the target time, and if the communication unit sends a DCI for data scheduling before entering the DRX, expecting the counterpart device to receive or transmit data based on the DCI.

Optionally, the first indication information is carried in DCI carrying indication information dedicated to indicating skipping the PDCCH monitoring, or the first indication information is carried in a bit field of a DCI for data scheduling, or the first indication information is carried in MAC CE signaling.

It is to be understood that the network device 400 according to the embodiment of the application may correspond to the network device in the method embodiment of the application and the above-mentioned and other operations and/or functions of each unit in the network device 400 are adopted to implement the corresponding flows executed by the network device in the method 200 shown in FIG. 7 respectively and will not be elaborated herein for simplicity.

FIG. 14 is a structural schematic diagram illustrating a communication device 500 provided in an embodiment of the present application. The communication device 500 shown in FIG. 14 includes a processor 510, wherein the processor 510 may call and run a computer program from a memory to implement a method in an embodiment of the present application.

Optionally, as shown in FIG. 14, the communication device 500 may further include a memory 520.The processor 510 may call and run a computer program from the memory 520 to implement a method in an embodiment of the present application.

The memory 520 may be a separate device independent of the processor 510 or may be integrated in the processor 510.

Optionally, as shown in FIG. 14, the communication device 500 may further include a transceiver 530, and the processor 510 may control the transceiver 530 to communicate with another device. Specifically, information or data may be sent to another device, or information or data sent by another device is received.

The transceiver 530 may include a transmitter and a receiver. The transceiver 530 may further include antennas, wherein the number of antennas may be one or more.

Optionally, the communication device 500 may be a network device according to an embodiment of the present application, and the communication device 500 may implement corresponding processes implemented by the network device in various methods of embodiments of the present application, which will not be repeated here for the sake of brevity.

Optionally, the communication device 500 may be a mobile terminal/ a terminal device according to an embodiment of the present application, and the communication device 500 may implement corresponding processes implemented by the mobile terminal/ the terminal device in various methods of the embodiments of the present application, which will not be repeated here for the sake of brevity.

FIG. 15 is a structural schematic diagram illustrating a device according to an embodiment of the present application. The device 600 shown in FIG. 15 includes a processor 610, wherein the processor 610 may call and run a computer program from a memory to implement a method in an embodiment of the present application.

Optionally, as shown in FIG. 15, the device 600 may further include a memory 620.The processor 610 may call and run a computer program from the memory 620 to implement a method in an embodiment of the present application.

The memory 620 may be a separate device independent of the processor 610 or may be integrated in the processor 610.

Optionally, the device 600 may further include an input interface 630.The processor 610 may control the input interface 630 to communicate with other devices or chip, in particular, to acquire information or data transmitted by other devices or chip.

Optionally, the chip 600 may further include an output interface 640.The processor 610 may control the output interface 640 to communicate with other devices or chip, in particular, to output information or data to other devices or chip.

Optionally, the device can be applied to the network device in the embodiment of the present application; moreover, the device may perform corresponding processes implemented by the network device in each of the methods of the embodiment of the present application. For brevity, details will not be described herein again.

Optionally, the device can be applied to the mobile terminal/ the terminal device in the embodiment of the present application; moreover, the device may perform corresponding processes implemented by the mobile terminal/ the terminal device in each of the methods of the embodiment of the present application. For brevity, details will not be described herein again.

Optionally, the device mentioned in the embodiment of the present application may also be a chip. For example, it can be a system-level chip, a system-on-chip, a chip system.

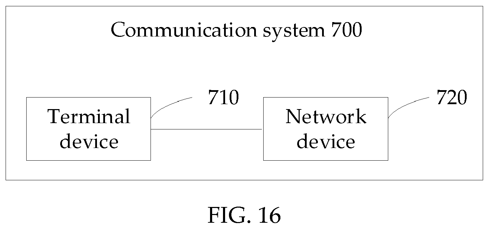

FIG. 16 is a schematic block diagram illustrating a communication system 700 provided in an embodiment of the present application. As shown in FIG. 16, the communication system 700 includes a terminal device 710 and a network device 720.

The terminal device 710 can be used to implement corresponding functions implemented by the terminal device in afore-described methods, and the network device 720 can be used to implement corresponding functions implemented by the network device in afore-described methods. For brevity, details will not be described herein again.

It is to be understood that the processor of the embodiment of the present application may be an integrated circuit chip with signal processing capabilities. In the implementation process, each step of the foregoing method embodiment may be completed by an integrated logic circuit in the processor or instructions in a form of software. The foregoing processor may be a general-purpose processor, a digital signal processor (DSP), an application specific integrated circuit (ASIC), a field programmable gate array (FPGA), or other programmable logic device, discrete gate, or a transistor logic device, or a discrete hardware component. The methods, steps, and logical block diagrams disclosed in the embodiments of the present application can be implemented or executed. The general-purpose processor may be a microprocessor or the processor may also be any conventional processor, or the like. The steps of the method disclosed in the embodiments of the present application may be directly implemented by the hardware decoding processor, or may be performed by a combination of hardware and software modules in the decoding processor. The software module may be located in a conventional storage medium in the art, such as a random access memory, a flash memory, a read only memory, a programmable read only memory or an electrically erasable programmable memory, and a register. The storage medium is located in the memory, and the processor reads the information in the memory and completes the steps of the above method in combination with its hardware.

It is understood that the memory in the embodiments of the present application may be a volatile memory or a non-volatile memory, or may include both volatile and non-volatile memory. Suitable non-volatile memories may include read only memory (ROM), programmable ROM (PROM), erasable programmable ROM (EPROM), electrically erasable programmable ROM (EEPROM), or flash memory. Volatile memories may include random access memory (RAM), which acts as an external cache. By way of example, but not limitation, many forms of RAM are available, such as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM).

It should be noted that the memory of the systems and methods described herein may include, but not limited to, these and any other suitable types of memory.

It is to be understood that foregoing memory is exemplary but not limited, and for example, the memory in the embodiments of the present application may also be as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) or a Direct Rambus RAM (DR RAM).

That is, the memory in the embodiments of the present application includes, but is not limited to, these and any other suitable types of memory.

The embodiment of the present application further provides a computer readable storage medium for storing a computer program.

Optionally, the computer readable storage medium can be applied to the network device in the embodiment of the present application; moreover, the computer readable storage medium enables a computer to execute corresponding processes implemented by the network device in each of the methods of the embodiment of the present application. For brevity, details will not be described herein again.

Optionally, the computer readable storage medium can be applied to the mobile terminal/ the terminal device in the embodiment of the present application; moreover, the computer readable storage medium enables a computer to execute corresponding processes implemented by the mobile terminal/ the terminal device in each of the methods of the embodiment of the present application. For brevity, details will not be described herein again.

The embodiment of the present application further provides a computer program product including computer program instructions.

Optionally, the computer program product can be applied to the network device in the embodiment of the present application; moreover, the computer program product enables a computer to execute corresponding processes implemented by the network device in each of the methods of the embodiment of the present application. For brevity, details will not be described herein again.

Optionally, the computer program product can be applied to the mobile terminal/ the terminal device in the embodiment of the present application; moreover, the computer program product enables a computer to execute corresponding processes implemented by the mobile terminal/ the terminal device in each of the methods of the embodiment of the present application. For brevity, details will not be described herein again.

The embodiment of the present application further provides a computer program.

Optionally, the computer program can be applied to the network device in the embodiment of the present application; moreover, the computer program enables a computer to execute corresponding processes implemented by the network device in each of the methods of the embodiment of the present application. For brevity, details will not be described herein again.

Optionally, the computer program can be applied to the mobile terminal/ the terminal device in the embodiment of the present application; moreover, the computer program enables a computer to execute corresponding processes implemented by the mobile terminal/ the terminal device in each of the methods of the embodiment of the present application. For brevity, details will not be described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Professional technicians can use different methods to implement the described functions for each specific application, but such implementation should not be considered to be beyond the scope of the present application.

It may be clearly understood by a person skilled in the art that, for ease and brevity of description, for a detailed working process of the foregoing system, apparatus, and unit, reference may be made to a corresponding process in the foregoing embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be skipped or not performed. In addition, the presented or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts presented as units may or may not be physical units, may be located in one position, or may be distributed on a plurality of network units. Some or all of the units may be selected according to actual requirements to achieve the purposes of the solutions of the embodiments.

In addition, the functional units in various implementations of the present disclosure may be integrated into one processing unit, or each unit may be physically present, or two or more units may be integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the method described in each of the embodiments of the application. The foregoing storage medium includes any medium that can store program code, such as a USB flash drive, a removable hard disk, a Read-Only Memory (ROM), a Random Access Memory (RAM), a magnetic disk, or an optical disc.

The above is only the specific implementation of the present application, but the scope of protection of the present application is not limited to this. Any person skilled in the art can easily think of changes or substitutions within the scope of technology disclosed in the application, which shall be covered within the scope of protection of the present application. Therefore, the scope of protection of the present application shall be subjected to the scope of protection in the claims.

## Claims

**1.** A PDCCH monitoring method, **characterized in** comprising:
receiving, by a terminal device, first indication information configured to indicate skipping Physical Downlink Control Channel (PDCCH) monitoring within a first interval duration;
in response to the first indication information, skipping, by the terminal device, the PDCCH monitoring within the first interval duration; and
determining, by the terminal device, whether to continue skipping the PDCCH monitoring.

**2.** The method of claim 1, **characterized in that** the determining, by the terminal device, whether to continue skipping the PDCCH monitoring comprises: determining, by the terminal device at first target time, whether to continue skipping the PDCCH monitoring.

**3.** The method of claim 2, **characterized in that** the determining, by the terminal device at the first target time, whether to continue skipping the PDCCH monitoring comprises:
determining, by the terminal device at the first target time, whether to continue skipping the PDCCH monitoring after the first interval duration.

**4.** The method of claim 3, **characterized in that** the determining, by the terminal device at the first target time, whether to continue skipping the PDCCH monitoring after the first interval duration comprises:
determining, by the terminal device at the first target time, whether to continue skipping the PDCCH monitoring within a second interval duration after the first interval duration.

**5.** The method of claim 1, **characterized in that** the determining, by the terminal device, whether to continue skipping the PDCCH monitoring comprises:
determining, by the terminal device, whether to continue skipping the PDCCH monitoring within a second interval duration after the first interval duration.

**6.** The method of claim 5, **characterized in that** the determining, by the terminal device, whether to continue skipping the PDCCH monitoring within the second interval duration after the first interval duration comprises:
determining, by the terminal device at first target time, whether to continue skipping the PDCCH monitoring within the second interval duration.

**7.** The method of claim 2, 3, 4 or 6, **characterized in that** the first target time is within the first interval duration, or the first target time is after the first interval duration.

**8.** The method of claim 7, **characterized in that** the first target time is the first available PDCCH monitoring position after the first interval duration, or the first target time is a PDCCH monitoring position within a T time period after the first interval duration.

**9.** The method of claim 4 or 6, **characterized in that** the first target time is after the first interval duration, and
a start time point of the second interval duration is after the first interval duration and the second interval duration does not comprises the first target time, or the start time point of the second interval duration is as the same as an end time point of the first interval duration and the second interval duration comprises the first target time.

**10.** The method of claim 4, 5, 6 or 9, **characterized in that** the second interval duration is equal to the first interval duration, or the second interval duration is configured by a network device or pre-configured.

**11.** The method of any of claims 1 to 10, **characterized in that** the determining, by the terminal device, whether to continue skipping the PDCCH monitoring comprises:
if the terminal device does not receive downlink control indication information (DCI) for data scheduling, and/or does not receive indication information indicating skipping the PDCCH monitoring, and/or does not receive wake-up indication information for waking up the terminal device to monitor the PDCCH, determining, by the terminal device, to continue skipping the PDCCH monitoring.

**12.** The method of claim 2, 3, 4, 6, 7, 8, 9 or 10, **characterized in that** the determining, by the terminal device, whether to continue skipping the PDCCH monitoring comprises:
if at the first target time the terminal device does not receive a DCI for data scheduling, and/or does not receive indication information indicating skipping the PDCCH monitoring, and/or does not receive wake-up indication information for waking up the terminal device to monitor the PDCCH, determining, by the terminal device, to continue skipping the PDCCH monitoring.

**13.** The method of any of claims 1 to 12, **characterized in that** in a case that the terminal device determines to continue skipping the PDCCH monitoring, the method further comprises:
continuing, by the terminal device, skipping the PDCCH monitoring within a second interval duration after the first interval duration.

**14.** The method of claim 13, **characterized in that** the method further comprises:
determining, by the terminal device, whether to continue skipping the PDCCH monitoring after the second interval duration.

**15.** The method of claim 14, **characterized in that** the determining, by the terminal device, whether to continue skipping the PDCCH monitoring after the second interval duration comprises:
determining, by the terminal device at second target time, whether to continue skipping the PDCCH monitoring after the second interval duration.

**16.** The method of claim 15, **characterized in that** the determining, by the terminal device at the second target time, whether to continue skipping the PDCCH monitoring after the second interval duration comprises:
determining, by the terminal device at the second target time, whether to continue skipping the PDCCH monitoring within a third interval duration after the second interval duration.

**17.** The method of claim 14, **characterized in that** the determining, by the terminal device, whether to continue skipping the PDCCH monitoring after the second interval duration comprises:
determining, by the terminal device, whether to continue skipping the PDCCH monitoring within a third interval duration after the second interval duration.

**18.** The method of claim 17, **characterized in that** the determining, by the terminal device, whether to continue skipping the PDCCH monitoring within the third interval duration after the second interval duration comprises:
determining, by the terminal device at second target time, whether to continue skipping the PDCCH monitoring within the third interval duration.

**19.** The method of claim 15, 16 or 18, **characterized in that** the second target time is within the second interval duration, or the second target time is after the second interval duration.

**20.** The method of claim 19, **characterized in that** the second target time is the first available PDCCH monitoring position after the second interval duration, or the second target time is a PDCCH monitoring position within a T time period after the second interval duration.

**21.** The method of claim 16 or 18, **characterized in that** the second target time is after the second interval duration, and
a start time point of the third interval duration is after the second interval duration and the third interval duration does not comprises the second target time, or the start time point of the third interval duration is as the same as an end time point of the second interval duration and the third interval duration comprises the second target time.

**22.** The method of claim 16, 17, 18 or 21, **characterized in that** the third interval duration is equal to the first interval duration and/or the second interval duration.

**23.** The method of any of claims 14 to 22, **characterized in that** the determining, by the terminal device, whether to continue skipping the PDCCH monitoring after the second interval duration comprises:
if the terminal device still does not receive a DCI for data scheduling, and/or does not receive indication information indicating skipping the PDCCH monitoring, and/or does not receive wake-up indication information for waking up the terminal device to monitor the PDCCH, determining, by the terminal device, to continue skipping the PDCCH monitoring after the second interval duration.

**24.** The method of claim 15, 16, 18, 19, 20, 21 or 22, **characterized in that** the determining, by the terminal device, whether to continue skipping the PDCCH monitoring after the second interval duration comprises:
if at the second target time the terminal device still does not receive a DCI for data scheduling, and/or does not receive indication information indicating skipping the PDCCH monitoring, and/or does not receive wake-up indication information for waking up the terminal device to monitor the PDCCH, determining, by the terminal device, to continue skipping the PDCCH monitoring after the second interval duration.

**25.** The method of any of claims 1 to 24, **characterized in that** within N interval durations after the first interval duration, the terminal device does not receive a DCI for data scheduling, and/or does not receive indication information indicating skipping the PDCCH monitoring, and/or does not receive wake-up indication information for waking up the terminal device to monitor the PDCCH, where N is a positive integer, the method further comprises:
if at target time after a N-th interval duration after the first interval duration, the terminal device does not receive a DCI for data scheduling, and/or does not receive indication information indicating skipping the PDCCH monitoring, and/or does not receive wake-up indication information for waking up the terminal device to monitor the PDCCH, continuing, by the terminal device, skipping the PDCCH monitoring within a fourth interval duration after the N-th interval duration.

**26.** The method of claim 25, **characterized in that** the fourth interval duration is M times the first interval duration, or the fourth interval duration is configured by a network device or is pre-configured, where M is a positive integer.

**27.** The method of claim 26, **characterized in that** M is configured by the network device or pre-configured.

**28.** The method of claim 8 or 20, **characterized in that** the T time period is configured by a network device or pre-configured.

**29.** The method of any of claims 1 to 28, **characterized in that** the method is applied to discontinuous reception (DRX).

**30.** The method of claim 29, **characterized in that** the method further comprises:
if at k-th target time the terminal device does not receive a DCI for data scheduling, and/or does not receive indication information indicating skipping the PDCCH monitoring, and/or does not receive wake-up indication information for waking up the terminal device to monitor the PDCCH, and determines at the k-th target time that the end of a next interval duration is during a DRX period, where k is an integer greater than or equal to 1,
then the terminal device performs one of the following operations:
entering DRX directly after the target time;
performing normal PDCCH monitoring after the target time until entering the DRX; and
performing normal PDCCH monitoring after the target time, and if receiving a DCI for data scheduling before entering the DRX, receiving or transmitting data based on the DCI.

**31.** The method of any of claims 1 to 30, **characterized in that** the first indication information is carried in DCI carrying indication information dedicated to indicating skipping the PDCCH monitoring, or the first indication information is carried in a bit field of a DCI for data scheduling, or the first indication information is carried in media access control control element (MAC CE) signaling.

**32.** A PDCCH monitoring method, **characterized in** comprising:
sending, by a network device, first indication information configured to indicate to a counterpart device to skip Physical Downlink Control Channel (PDCCH) monitoring within a first interval duration; and
determining, by the network device, whether the counterpart device is expected to monitor PDCCH after the first interval duration.

**33.** The method of claim 32, **characterized in that** the determining, by the network device, whether the counterpart device is expected to monitor the PDCCH after the first interval duration comprises: determining, by the network device at first target time, whether the counterpart device is expected to monitor the PDCCH after the first interval duration.

**34.** The method of claim 33, **characterized in that** the determining, by the network device at the first target time, whether the counterpart device is expected to monitor the PDCCH after the first interval duration comprises:
determining, by the network device at the first target time, whether the counterpart device is expected to monitor the PDCCH within a second interval duration after the first interval duration.

**35.** The method of claim 32, **characterized in that** the determining, by the network device, whether the counterpart device is expected to monitor the PDCCH after the first interval duration comprises:
determining, by the network device, whether the counterpart device is expected to monitor the PDCCH within a second interval duration after the first interval duration.

**36.** The method of claim 35, **characterized in that** the determining, by the network device, whether the counterpart device is expected to monitor the PDCCH within the second interval duration after the first interval duration comprises:
determining, by the network device at first target time, whether the counterpart device is expected to monitor the PDCCH within the second interval duration.

**37.** The method of claim 33, 34 or 36, **characterized in that** the first target time is within the first interval duration, or the first target time is after the first interval duration.

**38.** The method of claim 37, **characterized in that** the first target time is the first available PDCCH monitoring position after the first interval duration, or the first target time is a PDCCH monitoring position within a T time period after the first interval duration.

**39.** The method of claim 36 or 38, **characterized in that** the first target time is after the first interval duration, and
a start time point of the second interval duration is after the first interval duration and the second interval duration does not comprises the first target time, or the start time point of the second interval duration is as the same as an end time point of the first interval duration and the second interval duration comprises the first target time.

**40.** The method of claim 34, 35, 36 or 39, **characterized in that** the second interval duration is equal to the first interval duration, or the second interval duration is configured by the network device.

**41.** The method of any of claims 32 to 40, **characterized in that** the determining, by the network device, whether the counterpart device is expected to monitor the PDCCH after the first interval duration comprises:
after sending the first indication information, if the network device does not send downlink control information (DCI) for data scheduling, and/or does not send indication information indicating skipping the PDCCH monitoring, and/or does not send wake-up indication information for waking up the terminal device to monitor the PDCCH, determining, by the network device, that the counterpart device is not expected to monitor the PDCCH.

**42.** The method of claim 33, 34, 36, 37, 39 or 40, **characterized in that** the determining, by the network device, whether the counterpart device is expected to monitor the PDCCH after the first interval duration comprises:
after sending the first indication information, if at the first target time the network device does not send a DCI for data scheduling, and/or does not send indication information indicating skipping the PDCCH monitoring, and/or does not send wake-up indication information for waking up the terminal device to monitor the PDCCH, determining, by the network device, that the counterpart device is not expected to monitor the PDCCH.

**43.** The method of any of claims 32 to 42, **characterized in that** in a case that the network device determines not to expect the counterpart device to monitor the PDCCH after the first interval duration, the method further comprises:
not expecting, by the network device, the counterpart device to monitor the PDCCH within a second interval duration after the first interval duration.

**44.** The method of claim 43, **characterized in that** the method further comprises:
determining, by the network device, whether to expect the counterpart device to monitor the PDCCH after the second interval duration.

**45.** The method of claim 44, **characterized in that** the determining, by the network device, whether to expect the counterpart device to monitor the PDCCH after the second interval duration comprises:
determining, by the network device at second target time, whether to expect the counterpart device to monitor the PDCCH after the second interval duration.

**46.** The method of claim 45, **characterized in that** the determining, by the network device at the second target time, whether to expect the counterpart device to monitor the PDCCH after the second interval duration comprises:
determining, by the network device at the second target time, whether to expect the counterpart device to monitor the PDCCH within a third interval duration after the second interval duration.

**47.** The method of claim 44, **characterized in that** the determining, by the network device, whether to expect the counterpart device to monitor the PDCCH after the second interval duration comprises:
determining, by the network device, whether to expect the counterpart device to monitor the PDCCH within a third interval duration after the second interval duration.

**48.** The method of claim 47, **characterized in that** the determining, by the network device, whether to expect the counterpart device to monitor the PDCCH within the third interval duration after the second interval duration comprises:
determining, by the network device at second target time, whether to expect the counterpart device to monitor the PDCCH within the third interval duration.

**49.** The method of claim 45, 46 or 48, **characterized in that** the second target time is within the second interval duration, or the second target time is after the second interval duration.

**50.** The method of claim 49, **characterized in that** the second target time is the first available PDCCH monitoring position after the second interval duration, or the second target time is a PDCCH monitoring position within a T time period after the second interval duration.

**51.** The method of claim 46 or 48, **characterized in that** the second target time is after the second interval duration, and
a start time point of the third interval duration is after the second interval duration and the third interval duration does not comprises the second target time, or the start time point of the third interval duration is as the same as an end time point of the second interval duration and the third interval duration comprises the second target time.

**52.** The method of claim 46, 47, 48 or 51, **characterized in that** the third interval duration is equal to the first interval duration and/or the second interval duration.

**53.** The method of any of claims 44 to 52, **characterized in that** the determining, by the network device, whether to expect the counterpart device to monitor the PDCCH after the second interval duration comprises:
if the network device still does not send a DCI for data scheduling, and/or still does not send indication information indicating skipping the PDCCH monitoring, and/or still does not send wake-up indication information for waking up the terminal device to monitor the PDCCH, not expecting, by the network device, the counterpart device to monitor the PDCCH after the second interval duration.

**54.** The method of claim 45, 46, 48, 49, 50, 51 or 52, **characterized in that** the determining, by the network device, whether to expect the counterpart device to monitor the PDCCH after the second interval duration comprises:
if at the second target time the network device still does not send a DCI for data scheduling, and/or still does not send indication information indicating skipping the PDCCH monitoring, and/or still does not send wake-up indication information for waking up the terminal device to monitor the PDCCH, not expecting, by the network device, the counterpart device to monitor the PDCCH after the second interval duration.

**55.** The method of any of claims 32 to 54, **characterized in that** within N interval durations after the first interval duration, the network device does not send a DCI for data scheduling, and/or does not send indication information indicating skipping the PDCCH monitoring, and/or does not send wake-up indication information for waking up the terminal device to monitor the PDCCH, where N is a positive integer, the method further comprises:
if at target time after a N-th interval duration after the first interval duration, the network device does not send a DCI for data scheduling, and/or does not send indication information indicating skipping the PDCCH monitoring, and/or does not send wake-up indication information for waking up the terminal device to monitor the PDCCH, not expecting, by the network device, the counterpart device to monitor the PDCCH within a fourth interval duration after the N-th interval durations.

**56.** The method of claim 55, **characterized in that** the fourth interval duration is M times the first interval duration or M times the second interval duration, or the fourth interval duration is configured by the network device, where M is a positive integer.

**57.** The method of claim 56, **characterized in that** M is configured by the network device.

**58.** The method of claim 38 or 50, **characterized in that** the T time period is configured by the network device.

**59.** The method of any of claims 32 to 58, **characterized in that** the method is applied to discontinuous reception (DRX).

**60.** The method of claim 59, **characterized in that** the method further comprises:
if at k-th target time the network device does not send a DCI for data scheduling, and/or does not send indication information indicating skipping the PDCCH monitoring, and/or does not send wake-up indication information for waking up the terminal device to monitor the PDCCH, and determines at the k-th target time that at the end of a next interval duration the counterpart device is during a DRX period, where k is an integer greater than or equal to 1,
then the network device performs one of the following operations:
expecting the counterpart device to enter DRX directly after the target time;
expecting the counterpart device to perform normal PDCCH monitoring after the target time until entering the DRX; and
expecting the counterpart device to perform normal PDCCH monitoring after the target time, and if sending a DCI for data scheduling before entering the DRX, expecting the counterpart device to receive or transmit data based on the DCI.

**61.** The method of any of claims 32 to 61, **characterized in that** the first indication information is carried in DCI carrying indication information dedicated to indicating skipping the PDCCH monitoring, or the first indication information is carried in a bit field of a DCI for data scheduling, or the first indication information is carried in media access control control element (MAC CE) signaling.

**62.** A terminal device, **characterized in** comprising:
a communication unit, configured for receiving first indication information configured to indicate skipping Physical Downlink Control Channel (PDCCH) monitoring within a first interval duration;
a processing unit, configured for controlling, in response to the first indication information, the communication unit to skip the PDCCH monitoring within the first interval duration; and
the processing unit, further configured for determining whether to continue skipping the PDCCH monitoring.

**63.** The terminal device of claim 62, **characterized in that** the processing unit is configured for:
determining at first target time whether to continue skipping the PDCCH monitoring.

**64.** The terminal device of claim 63, **characterized in that** the processing unit is configured for:
determining at the first target time whether to continue skipping the PDCCH monitoring after the first interval duration.

**65.** The terminal device of claim 64, **characterized in that** the processing unit is configured for:
determining at the first target time whether to continue skipping the PDCCH monitoring within a second interval duration after the first interval duration.

**66.** The terminal device of claim 62, **characterized in that** the processing unit is configured for:
determining whether to continue skipping the PDCCH monitoring within a second interval duration after the first interval duration.

**67.** The terminal device of claim 66, **characterized in that** the processing unit is configured for:
determining at first target time whether to continue skipping the PDCCH monitoring within the second interval duration.

**68.** The terminal device of claim 61, 62, 63 or 65, **characterized in that** the first target time is within the first interval duration, or the first target time is after the first interval duration.

**69.** The terminal device of claim 68, **characterized in that** the first target time is the first available PDCCH monitoring position after the first interval duration, or the first target time is a PDCCH monitoring position within a T time period after the first interval duration.

**70.** The terminal device of claim 65 or 67, **characterized in that** the first target time is after the first interval duration, and
a start time point of the second interval duration is after the first interval duration and the second interval duration does not comprises the first target time, or the start time point of the second interval duration is as the same as an end time point of the first interval duration and the second interval duration comprises the first target time.

**71.** The terminal device of claim 65, 66, 67 or 70, **characterized in that** the second interval duration is equal to the first interval duration, or the second interval duration is configured by a network device or pre-configured.

**72.** The terminal device of any of claims 62 to 71, **characterized in that** the processing unit is configured for:
if the terminal device does not receive downlink control indication information (DCI) for data scheduling, and/or does not receive indication information indicating skipping the PDCCH monitoring, and/or does not receive wake-up indication information for waking up the terminal device to monitor the PDCCH, determining to continue skipping the PDCCH monitoring.

**73.** The terminal device of claim 63, 64, 65, 67, 68, 69, 70 or 71, **characterized in that** the processing unit is configured for:
if at the first target time the terminal device does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring.

**74.** The terminal device of any of claims 62 to 73, **characterized in that** in a case that the processing unit determines to continue skipping the PDCCH monitoring, the processing unit is further configured for:
controlling the communication unit to continue skipping the PDCCH monitoring within a second interval duration after the first interval duration.

**75.** The terminal device of claim 74, **characterized in that** the processing unit is configured for:
determining whether to continue skipping the PDCCH monitoring after the second interval duration.

**76.** The terminal device of claim 75, **characterized in that** the processing unit is configured for:
determining at second target time whether to continue skipping the PDCCH monitoring within the second interval duration.

**77.** The terminal device of claim 76, **characterized in that** the processing unit is configured for:
determining at the second target time whether to continue skipping the PDCCH monitoring within a third interval duration after the second interval duration.

**77.** The terminal device of claim 75, **characterized in that** the processing unit is configured for:
determining whether to continue skipping the PDCCH monitoring within a third interval duration after the second interval duration.

**79.** The terminal device of claim 78, **characterized in that** the processing unit is configured for:
determining at second target time whether to continue skipping the PDCCH monitoring within the third interval duration.

**80.** The terminal device of claim 76, 77 or 79, **characterized in that** the second target time is within the second interval duration, or the second target time is after the second interval duration.

**81.** The terminal device of claim 80, **characterized in that** the second target time is the first available PDCCH monitoring position after the second interval duration, or the second target time is a PDCCH monitoring position within a T time period after the second interval duration.

**82.** The terminal device of claim 77 or 79, **characterized in that** the second target time is after the second interval duration, and
a start time point of the third interval duration is after the second interval duration and the third interval duration does not comprises the second target time, or the start time point of the third interval duration is as the same as an end time point of the second interval duration and the third interval duration comprises the second target time.

**83.** The terminal device of claim 77, 78, 79 or 82, **characterized in that** the third interval duration is equal to the first interval duration and/or the second interval duration.

**84.** The terminal device of any of claims 75 to 83, **characterized in that** the processing unit is connected for:
if the terminal device still does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring after the second interval duration.

**85.** The terminal device of claim 76, 77, 79, 80, 81, 82 or 83, **characterized in that** the processing unit is configured for:
if at the second target time the terminal device still does not receive a DCI for data scheduling, and/or does not receive indication information indicating skipping the PDCCH monitoring, and/or does not receive wake-up indication information for waking up the terminal device to monitor the PDCCH, determining to continue skipping the PDCCH monitoring after the second interval duration.

**86.** The terminal device of any of claims 62 to 85, **characterized in that** within N interval durations after the first interval duration, the terminal device does not receive a DCI for data scheduling, and/or does not receive indication information indicating skipping the PDCCH monitoring, and/or does not receive wake-up indication information for waking up the terminal device to monitor the PDCCH, where N is a positive integer, the processing unit is further configured for:
if at target time after a N-th interval duration after the first interval duration, the terminal device does not receive a DCI for data scheduling, and/or does not receive indication information indicating skipping the PDCCH monitoring, and/or does not receive wake-up indication information for waking up the terminal device to monitor the PDCCH, continuing controlling the communication unit to skip the PDCCH monitoring within a fourth interval duration after the N-th interval duration.

**87.** The terminal device of claim 86, **characterized in that** the fourth interval duration is M times the first interval duration, or the fourth interval duration is configured by a network device or is pre-configured, where M is a positive integer.

**88.** The terminal device of claim 87, **characterized in that** M is configured by the network device or pre-configured.

**89.** The terminal device of claim 69 or 81, **characterized in that** the T time period is configured by a network device or pre-configured.

**90.** The terminal device of any of claims 62 to 89, **characterized in that** the terminal device is applied to discontinuous reception (DRX).

**91.** The terminal device of claim 90, **characterized in that** if at k-th target time the terminal device does not receive a DCI for data scheduling, and/or does not receive indication information indicating skipping the PDCCH monitoring, and/or does not receive wake-up indication information for waking up the terminal device to monitor the PDCCH, and determines at the k-th target time that the end of a next interval duration is during a DRX period, where k is an integer greater than or equal to 1,
then the processing unit performs one of the following operations:
entering DRX directly after the target time;
controlling the communication unit to perform normal PDCCH monitoring after the target time until entering the DRX; and
controlling the communication unit to perform normal PDCCH monitoring after the target time, and if the communication unit receives a DCI for data scheduling before entering the DRX, controlling the communication unit to receive or transmit data based on the DCI.

**92.** The terminal device of any of claims 62 to 91, **characterized in that** the first indication information is carried in DCI carrying indication information dedicated to indicating skipping the PDCCH monitoring, or the first indication information is carried in a bit field of a DCI for data scheduling, or the first indication information is carried in media access control control element (MAC CE) signaling.

**93.** A network device, **characterized in** comprising:
a communication unit, configured for sending first indication information configured to indicate to a counterpart device to skip Physical Downlink Control Channel (PDCCH) monitoring within a first interval duration; and
a processing unit, configured for determining whether the counterpart device is expected to monitor PDCCH after the first interval duration.

**94.** The network device of claim 93, **characterized in that** the processing unit is configured for:
determining at first target time whether the counterpart device is expected to monitor the PDCCH after the first interval duration.

**95.** The network device of claim 94, **characterized in that** the processing unit is configured for:
determining at the first target time, whether the counterpart device is expected to monitor the PDCCH within a second interval duration after the first interval duration.

**96.** The network device of claim 93, **characterized in that** the processing unit is configured for:
determining whether the counterpart device is expected to monitor the PDCCH within a second interval duration after the first interval duration.

**97.** The network device of claim 96, **characterized in that** the processing unit is configured for:
determining at first target time whether the counterpart device is expected to monitor the PDCCH within the second interval duration.

**98.** The network device of claim 94, 95 or 97, **characterized in that** the first target time is within the first interval duration, or the first target time is after the first interval duration.

**99.** The network device of claim 98, **characterized in that** the first target time is the first available PDCCH monitoring position after the first interval duration, or the first target time is a PDCCH monitoring position within a T time period after the first interval duration.

**100.** The network device of claim 97 or 99, **characterized in that** the first target time is after the first interval duration, and
a start time point of the second interval duration is after the first interval duration and the second interval duration does not comprises the first target time, or the start time point of the second interval duration is as the same as an end time point of the first interval duration and the second interval duration comprises the first target time.

**101.** The network device of claim 95, 96, 97 or 100, **characterized in that** the second interval duration is equal to the first interval duration, or the second interval duration is configured by the network device.

**102.** The network device of any of claims 93 to 101, **characterized in that** the processing unit is configured for:
after sending the first indication information, if the communication unit does not send downlink control information (DCI) for data scheduling, and/or does not send indication information indicating skipping the PDCCH monitoring, and/or does not send wake-up indication information for waking up the terminal device to monitor the PDCCH, determining that the counterpart device is not expected to monitor the PDCCH.

**103.** The network device of claim 94, 95, 97, 98, 100 or 101, **characterized in that** the processing unit is configured for:
after sending the first indication information, if at the first target time the communication unit does not send a DCI for data scheduling, and/or does not send indication information indicating skipping the PDCCH monitoring, and/or does not send wake-up indication information for waking up the terminal device to monitor the PDCCH, determining that the counterpart device is not expected to monitor the PDCCH.

**104.** The network device of any of claims 93 to 103, **characterized in that** in a case that the processing unit determines not to expect the counterpart device to monitor the PDCCH after the first interval duration, the processing unit is further configured for:
not expecting the counterpart device to monitor the PDCCH within a second interval duration after the first interval duration.

**105.** The network device of claim 104, **characterized in that** the processing unit is further configured for:
determining whether to expect the counterpart device to monitor the PDCCH after the second interval duration.

**106.** The network device of claim 105, **characterized in that** the processing unit is configured for:
determining at second target time whether to expect the counterpart device to monitor the PDCCH after the second interval duration.

**107.** The network device of claim 106, **characterized in that** the processing unit is configured for:
determining at the second target time whether to expect the counterpart device to monitor the PDCCH within a third interval duration after the second interval duration.

**108.** The network device of claim 105, **characterized in that** the processing unit is configured for:
determining whether to expect the counterpart device to monitor the PDCCH within a third interval duration after the second interval duration.

**109.** The network device of claim 108, **characterized in that** the processing unit is configured for:
determining at second target time whether to expect the counterpart device to monitor the PDCCH within the third interval duration.

**110.** The network device of claim 106, 107 or 109, **characterized in that** the second target time is within the second interval duration, or the second target time is after the second interval duration.

**111.** The network device of claim 110, **characterized in that** the second target time is the first available PDCCH monitoring position after the second interval duration, or the second target time is a PDCCH monitoring position within a T time period after the second interval duration.

**112.** The network device of claim 107 or 109, **characterized in that** the second target time is after the second interval duration, and
a start time point of the third interval duration is after the second interval duration and the third interval duration does not comprises the second target time, or the start time point of the third interval duration is as the same as an end time point of the second interval duration and the third interval duration comprises the second target time.

**113.** The network device of claim 107, 108, 109 or 112, **characterized in that** the third interval duration is equal to the first interval duration and/or the second interval duration.

**114.** The network device of any of claims 105 to 113, **characterized in that** the processing unit is configured for:
if the communication unit still does not send a DCI for data scheduling, and/or still does not send indication information indicating skipping the PDCCH monitoring, and/or still does not send wake-up indication information for waking up the terminal device to monitor the PDCCH, not expecting the counterpart device to monitor the PDCCH after the second interval duration.

**115.** The network device of claim 106, 107, 109, 110, 111, 112 or 113, **characterized in that** the processing unit is configured for:
if at the second target time the communication unit still does not send a DCI for data scheduling, and/or still does not send indication information indicating skipping the PDCCH monitoring, and/or still does not send wake-up indication information for waking up the terminal device to monitor the PDCCH, not expecting the counterpart device to monitor the PDCCH after the second interval duration.

**116.** The network device of any of claims 93 to 115, **characterized in that** within N interval durations after the first interval duration, the communication unit does not send a DCI for data scheduling, and/or does not send indication information indicating skipping the PDCCH monitoring, and/or does not send wake-up indication information for waking up the terminal device to monitor the PDCCH, where N is a positive integer, the processing unit is further configured for:
if at target time after a N-th interval duration after the first interval duration, the communication unit does not send a DCI for data scheduling, and/or does not send indication information indicating skipping the PDCCH monitoring, and/or does not send wake-up indication information for waking up the terminal device to monitor the PDCCH, not expecting the counterpart device to monitor the PDCCH within a fourth interval duration after the N-th interval durations.

**117.** The network device of claim 116, **characterized in that** the fourth interval duration is M times the first interval duration or M times the second interval duration, or the fourth interval duration is configured by the network device, where M is a positive integer.

**118.** The network device of claim 117, **characterized in that** M is configured by the network device.

**119.** The network device of claim 99 or 111, **characterized in that** the T time period is configured by the network device.

**120.** The network device of any of claims 93 to 119, **characterized in that** the network device is applied to discontinuous reception (DRX).

**121.** The network device of claim 120, **characterized in that** if at k-th target time the communication unit does not send a DCI for data scheduling, and/or does not send indication information indicating skipping the PDCCH monitoring, and/or does not send wake-up indication information for waking up the terminal device to monitor the PDCCH, and determines at the k-th target time that at the end of a next interval duration the counterpart device is during a DRX period, where k is an integer greater than or equal to 1,
then the processing unit performs one of the following operations:
expecting the counterpart device to enter DRX directly after the target time;
expecting the counterpart device to perform normal PDCCH monitoring after the target time until entering the DRX; and
expecting the counterpart device to perform normal PDCCH monitoring after the target time, and if the communication unit sends a DCI for data scheduling before entering the DRX, expecting the counterpart device to receive or transmit data based on the DCI.

**122.** The network device of any of claims 93 to 121, **characterized in that** the first indication information is carried in DCI carrying indication information dedicated to indicating skipping the PDCCH monitoring, or the first indication information is carried in a bit field of a DCI for data scheduling, or the first indication information is carried in media access control control element (MAC CE) signaling.

**123.** A terminal device, **characterized in** comprising a processor and a memory, the memory is configured to store a computer program, and the processor is configured to call and run the computer program stored in the memory to execute the method of any of claims 1 to 31.

**124.** A network device, **characterized in** comprising a processor and a memory, the memory is configured to store a computer program, and the processor is configured to call and run the computer program stored in the memory to execute the method of any of claims 32 to 61.

**125.** An apparatus, **characterized in** comprising a processor configured to call and run a computer program stored in a memory to enable a device with the apparatus installed to execute the method of any of claims 1 to 31.

**126.** An apparatus, **characterized in** comprising a processor configured to call and run a computer program stored in a memory to enable a device with the apparatus installed to execute the method of any of claims 32 to 61.

**127.** A computer readable storage medium, **characterized in** being configured to store a computer program, which enables a computer to execute the method of any of claims 1 to 31.

**128.** A computer readable storage medium, **characterized in** being configured to store a computer program, which enables a computer to execute the method of any of claims 32 to 61.

**129.** A computer program product, **characterized in** comprising computer program instructions, which enable a computer to execute the method of any of claims 1 to 31.

**130.** A computer program product, **characterized in** comprising computer program instructions, which enable a computer to execute the method of any of claims 32 to 61.

**131.** A computer program, **characterized in** enabling a computer to execute the method of any of claims 1 to 31.

**132.** A computer program, **characterized in** enabling a computer to execute the method of any of claims 32 to 61.
